# EUROPEAN PATENT APPLICATION

(11) **EP 4 600 654 A1**
(43) Date of publication of application: **13.08.2025**
(21) Application number: 23874567.3
(22) Date of filing: 30.08.2023
(51) Int. Cl.: G01N 35/00, G01N 35/10

(54) **DISPENSING DEVICE AND PROBE STATE CONFIRMATION METHOD**

(30) Priority: 06.10.2022 JP 2022161559
(71) Applicant: HITACHI HIGH-TECH CORPORATION, Tokyo 105-6409 (JP)
(72) Inventor: HASEGAWA Naoki, Tokyo 105-6409 (JP); MORI Takamichi, Tokyo 105-6409 (JP); WAKUI Akihito, Tokyo 105-6409 (JP)
(74) Representative: Strehl & Partner mbB
(86) International application number: PCT/JP2023/031390
(87) International publication number: WO 2024/075437

(57) **Abstract**

An object of the invention is to provide a dispensing device and a probe state checking method capable of grasping an appropriate replacement time of a probe while reducing a decrease in dispensing accuracy. Therefore, according to the invention, in a dispensing device including: a probe configured to aspirate and eject a liquid; a sensor configured to detect contact of a tip of the probe; a drive unit configured to drive the probe in an up-down direction; and a control unit configured to control the drive unit, the control unit performs a checking operation of checking a change in a length of the probe by lowering the probe by the drive unit until contact with a predetermined reference surface forming a part of the dispensing device is detected.

## Description

### Technical Field

The present invention relates to a dispensing device provided with a probe and a probe state checking method.

### Background Art

For example, in an analysis device, a non-sealed specimen container having an open top is generally used. However, in recent years, a sealed specimen container such as a vacuum blood collection tube in which an opening is closed with a plug has been widely used, and there is an increasing need for a dispensing device capable of directly collecting a specimen without opening the plug of the sealed specimen container. When a specimen is aspirated from such a hermetically sealed specimen container, for example, Patent Literature 1 discloses an autonomous analysis device that monitors penetration performance and determines a replacement time of the probe because performance of penetration through the plug deteriorates due to wear or the like of a tip of the probe when the specimen is repeatedly dispensed through the plug of the container with the same probe.

### Citation List

### Patent Literature

Patent Literature 1: JP2015-102427A

### Summary of Invention

### Technical Problem

Since the technique described in Patent Literature 1 only monitors the penetration performance of the probe, even if the plug of the container can be reliably penetrated, accuracy when dispensing a liquid cannot always be ensured. That is, according to the study of the inventors, it is found that, when the plug is repeatedly penetrated by the probe, a length of the probe is shortened, variation occurs in an operation of bringing the probe into contact with a reaction vessel at the time of ejecting the specimen, and as a result, there is a possibility that dispensing accuracy is lowered.

An object of the invention is to provide a dispensing device and a probe state checking method capable of grasping an appropriate replacement time of a probe while reducing a decrease in dispensing accuracy.

### Solution to Problem

In order to solve the above problems, the invention provides a dispensing device including: a probe configured to aspirate and eject a liquid; a sensor configured to detect contact of a tip of the probe; a drive unit configured to drive the probe in an up-down direction; and a control unit configured to control the drive unit. The control unit performs a checking operation of checking a change in a length of the probe by lowering the probe by the drive unit until contact with a predetermined reference surface forming a part of the dispensing device is detected.

### Advantageous Effects of Invention

According to the invention, it is possible to provide a dispensing device and a probe state checking method capable of grasping an appropriate replacement time of a probe while reducing a decrease in dispensing accuracy.

### Brief Description of Drawings

[FIG. 1] FIG. 1 is a schematic diagram showing a main configuration of an autonomous analysis device.
[FIG. 2] FIG. 2 is a schematic diagram showing a configuration of a specimen dispensing mechanism.
[FIG. 3] FIG. 3 is a diagram showing a mechanism for detecting contact of a tip of a specimen dispensing probe.
[FIG. 4] FIG. 4 is a diagram showing a position relationship between a new specimen dispensing probe, a specimen dispensing probe whose tip is worn, and a reference surface.
[FIG. 5] FIG. 5 is a flowchart showing an operation when measuring a length of an unused probe.
[FIG. 6] FIG. 6 is a time chart showing an operation when measuring a probe length.
[FIG. 7] FIG. 7 is a flowchart showing an operation when a state of the probe is checked based on a change in the probe length.
[FIG. 8] FIG. 8 is a diagram showing a position relationship with a reaction vessel when an unused probe and a used probe are lowered by a specified amount from an origin height.
[FIG. 9] FIG. 9 is a schematic diagram showing a concept of correcting a probe lowering amount.
[FIG. 10] FIG. 10 is a graph showing an example of a relationship between a change amount of the probe lowering amount and the number of dispenses.
[FIG. 11] FIG. 11 is a diagram showing an example of a probe state checking screen.
[FIG. 12] FIG. 12 is a diagram showing an example of a probe length setting screen.

### Description of Embodiments

An embodiment of the invention will be described in detail with reference to the drawings. In the following embodiment, it is needless to mention that components (also including element steps and the like) thereof are not necessarily essential unless otherwise specified or unless clearly considered to be essential in principle.

In the present embodiment, an autonomous analysis device will be described as an example. Examples of the autonomous analysis device include a biochemical autonomous analysis device, an immune autonomous analysis device, and a gene autonomous analysis device. However, this is merely an example of the autonomous analysis device, and widely includes a device for analyzing a specimen by mixing a specimen such as plasma, serum, or urine with various reagents. For example, a mass spectrometer used for clinical examination and a coagulation analyzer for measuring a coagulation time of blood are included. In addition, the invention is also applicable to a composite system of these and a biochemical autonomous analysis device, an immune autonomous analysis device, or the like, or an automatic analysis system to which these are applied.

### [Configuration of Autonomous Analysis Device]

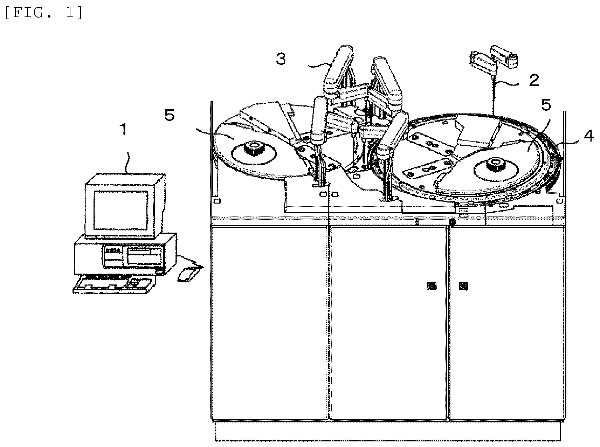

FIG. 1 is a schematic diagram showing a main configuration of an autonomous analysis device. As shown in FIG. 1, the autonomous analysis device includes a computer 1, a specimen dispensing mechanism 2, a reagent cooler 5, a reagent dispensing mechanism 3, and the like.

The computer 1 includes an output unit, an input unit, and a storage unit. The output unit displays an analysis result, an alarm, and the like to a user, and is, for example, a display. The input unit is used by a user to input characters and numerical values in order to set operation conditions of the device, and is, for example, a keyboard. The storage unit is for storing an analysis result and a setting value, and is, for example, a memory. The user performs an analysis request and various settings by operating the input unit while viewing the output unit.

The specimen dispensing mechanism 2 aspirates a specimen from a specimen container (not shown in FIG. 1) placed in the device and ejects the specimen into a reaction vessel 4. The reagent cooler 5 is implemented to cool a reagent to be mixed with the specimen, and an upper side thereof is closed by a lid. The reagent dispensing mechanism 3 aspirates the reagent through a hole provided in a lid of the reagent cooler 5 and ejects the reagent into a reaction vessel 4. The specimen and the reagent ejected into the reaction vessel 4 are mixed by a stirring mechanism (not shown) to prepare a mixed liquid in the reaction vessel 4. Absorbance and the like of the mixed liquid are measured by an analysis unit (not shown), and a control unit (not shown) calculates a concentration of a predetermined component contained in the mixed liquid based on a measurement result. The control unit also controls an operation of each mechanism such as the specimen dispensing mechanism.

### [Configuration of Dispensing Mechanism]

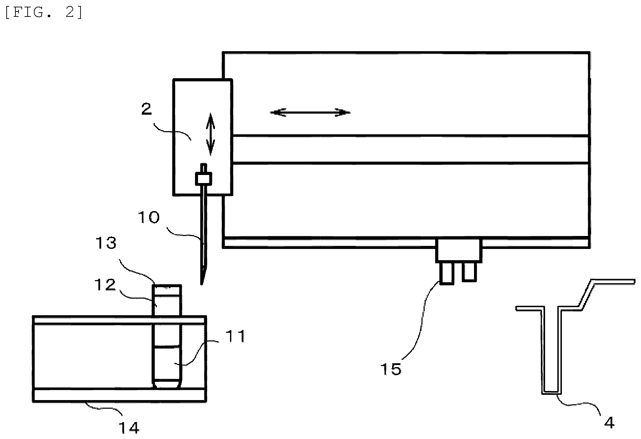

FIG. 2 is a schematic diagram showing a configuration of the specimen dispensing mechanism. In addition to a specimen dispensing probe 10, the specimen dispensing mechanism 2 includes a horizontal drive portion, an upper and lower drive portion, a syringe, and the like (not shown).

Meanwhile, a specimen 11 is stored in a specimen container 12, and one or a plurality of specimen containers 12 are transported to a dispensing position by a transport mechanism (not shown) in a state of being mounted on a specimen rack 14. In the present embodiment, the specimen container 12 is assumed to be a vacuum test tube or the like that is closed with a plug 13, and a specimen container 12 that is not closed may also be included.

When dispensing the specimen, the control unit first controls the horizontal drive portion of the specimen dispensing mechanism 2 to drive the specimen dispensing probe 10 in a horizontal direction and move the specimen dispensing probe 10 to a position above the specimen container 12. Next, the control unit controls the upper and lower drive portion of the specimen dispensing mechanism 2 to drive the specimen dispensing probe 10 downward in a vertical direction to penetrate the plug 13 of the specimen container 12. Thereafter, the control unit operates the syringe in a state in which the specimen dispensing probe 10 is immersed in the specimen 11 to aspirate a predetermined amount of the specimen 11 into the specimen dispensing probe 10.

When the aspiration of the specimen 11 is completed, the control unit controls the upper and lower drive portion to raise the specimen dispensing probe 10, and then controls the horizontal drive portion to move the specimen dispensing probe 10 to a position above the reaction vessel 4. Next, the control unit controls the upper and lower drive portion of the specimen dispensing mechanism 2 to lower the specimen dispensing probe 10, and then operates the syringe to eject the predetermined amount of the specimen 11, that is, the specimen 11 in the specimen dispensing probe 10 into the reaction vessel 4.

When the control unit moves the specimen dispensing probe 10 to each position described above and stops the specimen dispensing probe 10, a control method for stopping the drive unit based on a detection signal from a predetermined sensor or a control method for giving a specified operation amount from a reference position to a stop position to the drive unit is used. The tip of the specimen dispensing probe 10 has a sharp shape to penetrate the plug 13.

Further, the control unit moves the specimen dispensing probe 10 to a cleaning tank 15 and ejects cleaning water from the cleaning tank 15 to the specimen dispensing probe 10 every time aspiration and ejection of one specimen are completed, thereby cleaning the specimen dispensing probe 10. Accordingly, when another specimen is dispensed by the same specimen dispensing probe 10 thereafter, mixing of the previous specimen can be prevented.

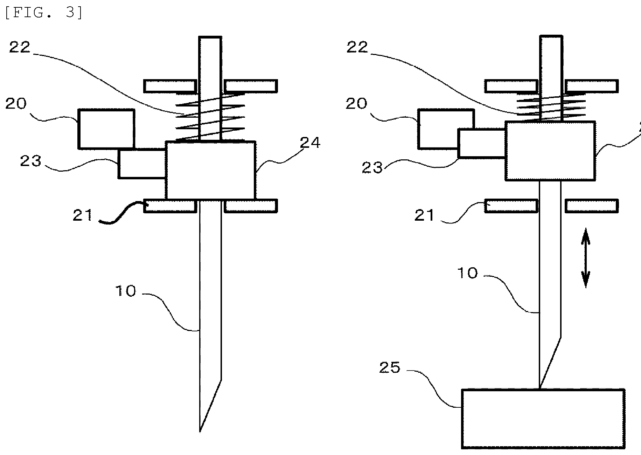

FIG. 3 is a diagram showing a mechanism for detecting contact of the tip of the specimen dispensing probe. As shown in FIG. 3, the specimen dispensing mechanism 2 according to the present embodiment further includes a stopper 21, a detection plate 23, a contact detection sensor 20, and a spring 22. The stopper 21 restricts the specimen dispensing probe 10 from moving downward beyond a specified range. The detection plate 23 is fixed to the specimen dispensing probe 10 via a connection portion 24 above the stopper 21. The contact detection sensor 20 is a sensor that detects contact of the tip of the specimen dispensing probe 10 by blocking light when the detection plate 23 enters a light irradiation range (detection range) of the contact detection sensor 20. The spring 22 presses the connection portion 24 integrated with the specimen dispensing probe 10 downward.

When an object is not in contact with the tip of the specimen dispensing probe 10, as shown on the left side of FIG. 3, the connection portion 24 is pressed against the stopper 21 by a pressing force of the spring 22 and positioned, and the detection plate 23 does not exist within the detection range of the contact detection sensor 20. However, when an object 25 comes into contact with the tip of the probe while the specimen dispensing probe 10 is being lowered, as shown in the right side of FIG. 3, the connection portion 24 moves upward against the pressing force of the spring 22, so that the detection plate 23 also moves upward and enters the detection range of the contact detection sensor 20.

When the contact detection sensor 20 detects the entry of the detection plate 23, the control unit controls the upper and lower drive portion to stop a lowering operation of the specimen dispensing probe 10. Accordingly, even if the specimen dispensing probe 10 comes into contact with the object 25 while being lowered, the specimen dispensing probe 10 is safely stopped without damaging the device. When the tip of the specimen dispensing probe 10 is separated from the object 25, the connection portion 24 is pressed against the stopper 21 by the pressing force of the spring 22, and the specimen dispensing probe 10 returns to the positioned state.

Even if the object 25 is the reaction vessel 4, the cleaning tank 15, or the like, the contact is detected by the same behavior. However, when the specimen dispensing probe 10 penetrates the plug 13 of the specimen container 12 for specimen aspiration, it is desirable to perform control such that the lowering operation of the specimen dispensing probe 10 is not stopped even if the detection plate 23 enters the detection range of the contact detection sensor 20.

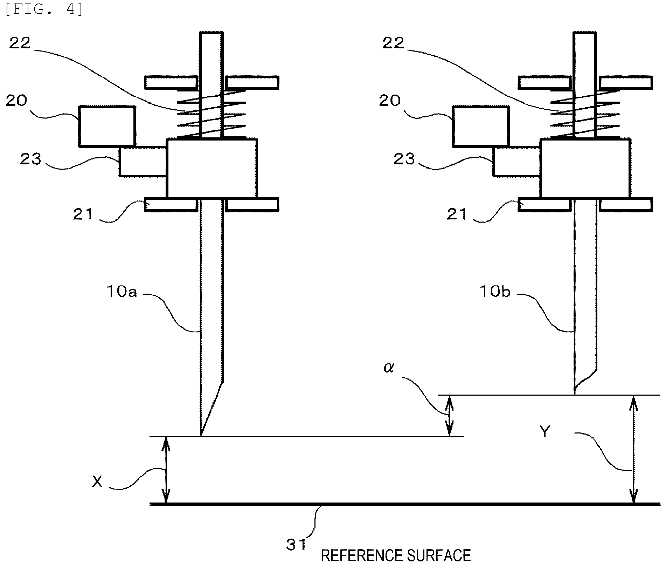

FIG. 4 is a diagram showing a position relationship between a new specimen dispensing probe, a specimen dispensing probe whose tip is worn, and a reference surface. As shown in FIG. 4, a new specimen dispensing probe (hereinafter, referred to as an unused probe 10a) and a specimen dispensing probe whose tip is worn (hereinafter, referred to as a used probe 10b) have different positions of the tip of the probe at an origin height. Here, the origin height of the probe is a probe height when a motor constituting the upper and lower drive portion of the specimen dispensing mechanism 2 is at an origin position. According to FIG. 4, the position of the detection plate 23 and the like of the used probe 10b is the same as that of the unused probe 10a, but the position of the tip of the used probe 10b is higher than the position of the tip of the unused probe 10a. This is because when the probe is repeatedly used for dispensing, particularly when the probe repeatedly penetrates the plug 13, a length of the probe is shortened. Therefore, when the probe is lowered from the origin height until the probe comes into contact with the reference surface 31, a lowering amount Y of the used probe 10b is longer than a reference lowering amount X of the unused probe 10a.

### [Method for Measuring Length of Unused Probe (Reference Length)]

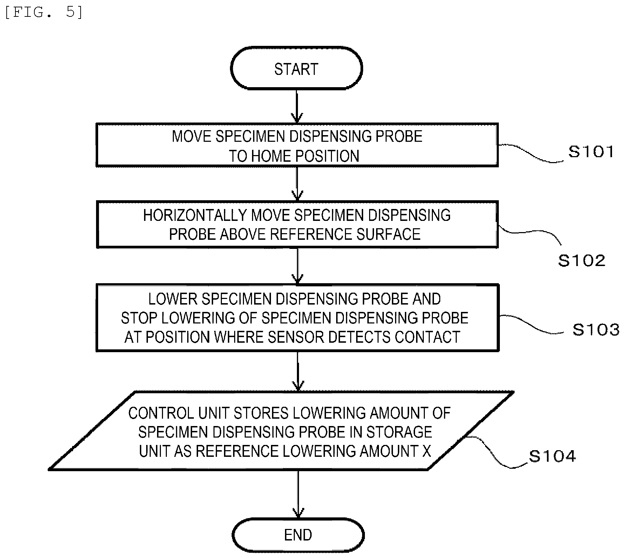

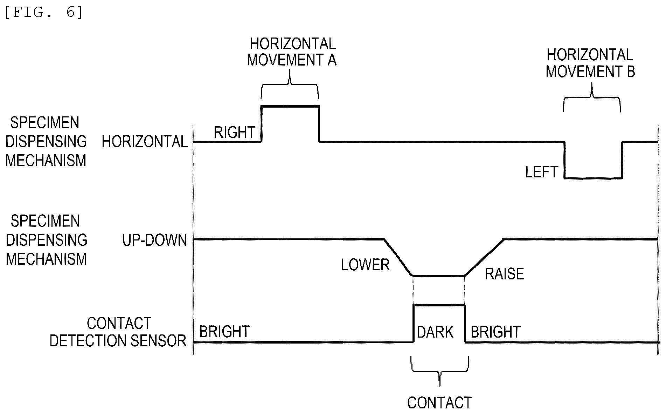

FIG. 5 is a flowchart showing an operation when measuring the length of the unused probe, and FIG. 6 is a time chart showing the operation when measuring the probe length. First, the unused probe 10a, which is a new specimen dispensing probe 10, is attached to the specimen dispensing mechanism 2 of the autonomous analysis device by a user or the like. Next, the user performs a predetermined operation using the input unit to instruct the start of a measurement operation of the reference length (reference lowering amount) .

Then, the control unit controls the horizontal drive portion of the specimen dispensing mechanism 2 to move the unused probe 10a to a home position at a specified horizontal position (step S101). When the unused probe 10a is at the home position, an up-down direction position of the unused probe is the same as the origin height described above.

Next, the control unit controls the horizontal drive portion of the specimen dispensing mechanism 2 to move the unused probe 10a to above a predetermined reference surface 31 forming a part of the autonomous analysis device (see FIG. 4) (step S102). The movement at this time is, for example, a parallel movement to the right or a rotational movement in a clockwise direction, and corresponds to a horizontal movement A in FIG. 6.

Thereafter, the control unit controls the upper and lower drive portion of the specimen dispensing mechanism 2 to lower the unused probe 10a, and stops the lowering of the unused probe 10a when the contact detection sensor 20 detects the contact with the reference surface 31 (step S103). At this time, the control unit calculates the lowering amount from the origin height based on an operation log of the upper and lower drive portion, and stores a calculation result in the storage unit as a reference lowering amount X (step S104). When the tip of the unused probe 10a comes into contact with the reference surface 31, the detection plate 23 enters the light irradiation range of the contact detection sensor 20 and becomes dark, so that the contact is detected as shown in FIG. 6.

Thereafter, the control unit controls the upper and lower drive portion to raise the unused probe 10a to the origin height. Further, the control unit controls the horizontal drive portion to move the unused probe 10a to the home position. The movement at this time is, for example, parallel movement to the left or a rotational movement in a left direction, and corresponds to a horizontal movement B in FIG. 6.

When the reference surface 31 is, for example, a plane forming the cleaning tank 15, there is an advantage that the specimen can be cleaned by the cleaning tank 15 even if the specimen adheres to the reference surface 31 due to the contact with the specimen dispensing probe 10. However, a portion other than the cleaning tank 15 may be used as the reference surface 31 as long as it is a flat surface that forms part of the device and whose position relationship with the device (especially height) does not change, as would be a bottom surface of a container, which may cause variation in its position relationship with the device. In addition, the reference surface 31 is not limited to a portion already provided in the device, and may be formed by providing a new metallic portion that is difficult to deform within a movement trajectory of the specimen dispensing probe 10.

### [State Checking Method Based on Change in Probe Length]

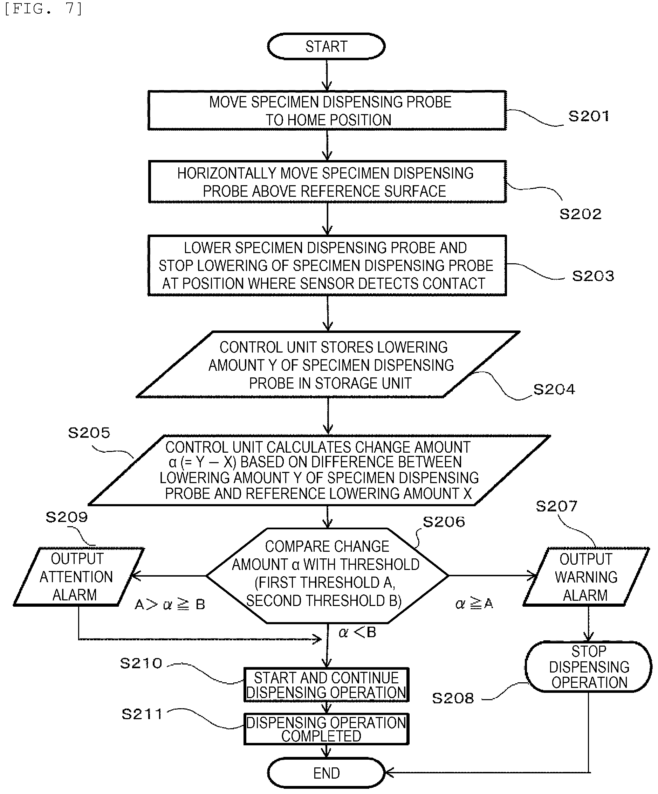

FIG. 7 is a flowchart showing an operation when a state of the probe is checked based on a change in a probe length. When a state checking operation of the probe is started at a predetermined timing to be described later, the length of the used probe 10b worn by the repeated dispensing (lowering amount) is measured.

First, the control unit controls the horizontal drive portion of the specimen dispensing mechanism 2 to move the used probe 10b to a home position at a specified horizontal position (step S201).

Next, the control unit controls the horizontal drive portion of the specimen dispensing mechanism 2 to move the used probe 10b to above the reference surface 31 (step S202). Thereafter, the control unit controls the upper and lower drive portion of the specimen dispensing mechanism 2 to lower the used probe 10b, and stops the lowering of the used probe 10b when the contact detection sensor 20 detects the contact with the reference surface 31 (step S203). At this time, the control unit calculates the lowering amount from the origin height based on the operation log of the upper and lower drive portion, and stores the calculation result in the storage unit as the lowering amount Y (step S204).

Next, the control unit calculates a change amount α (see FIG. 4) of the lowering amount from a difference between the lowering amount Y measured in step S204 and the reference lowering amount X measured in FIG. 5 (step S205). In practice, there is a certain detection delay from when the specimen dispensing probe 10 comes into contact with the reference surface 31 to when the contact detection sensor 20 detects the entry of the detection plate 23. However, since this detection delay is generally constant regardless of the change amount in the length of the specimen dispensing probe 10 and does not affect the measurement of the lowering amount X and the reference lowering amount Y, the detection delay is not considered in the present embodiment.

Here, when the specimen dispensing probe 10 is worn due to repeated use, the change amount α of the lowering amount gradually increases, and finally, the specimen dispensing probe 10 needs to be replaced. Therefore, the control unit outputs a warning alarm (first alarm) at a stage where the dispensing cannot be performed unless the specimen dispensing probe 10 is replaced. Further, the control unit outputs an attention alarm (second alarm) even at a stage where a replacement time of the specimen dispensing probe 10 is approaching. In order to determine the necessity of outputting such two types of alarms, two types of thresholds are stored in advance in the storage unit. In the present embodiment, two types of alarms and two types of thresholds are described as an example, but the number of types of alarms and thresholds may be one or three or more.

The first threshold A is a threshold for determining whether it is necessary to output a warning alarm, and when the change amount α reaches the threshold, required dispensing accuracy cannot be ensured, and it is considered that the replacement of the used probe 10b is necessary. The second threshold B is a threshold for determining whether it is necessary to output an attention alarm, and when the change amount α reaches the threshold, it is considered that the replacement time of the used probe 10b is approaching. The second threshold B is smaller than the first threshold A, and these thresholds are stored in the storage unit.

The control unit compares the change amount α calculated in step S205 with the first threshold A and the second threshold B (step S206). When the change amount α is equal to or greater than the first threshold A, the control unit outputs a warning alarm (step S207) and stops the dispensing operation (step S208). In step S208, the subsequent dispensing operation may not be performed before the start of a series of specimen dispensing operations, and the dispensing operation after the completion of the dispensing of the remaining specimens may not be performed during the series of specimen dispensing operations.

On the other hand, when it is determined in step S206 that the change amount α is less than the first threshold and equal to or greater than the second threshold B, the control unit outputs an attention alarm (step S209). In this case, since the dispensing accuracy can be ensured, the dispensing operation is started and continued (step S210), and when all the requested specimens are dispensed, the dispensing operation is completed (step S211).

Further, when it is determined in step S206 that the change amount α is less than the second threshold **B,** the control unit starts and continues the dispensing operation without outputting an alarm (step S210), and completes the dispensing operation when all the specimens are dispensed (step S211).

In this way, by determining the state of the probe based on the change in the probe length, it is possible to grasp an appropriate replacement time of the probe. It is also possible to determine an abnormality such as breakage or bending of the probe.

### [Method for Correcting Probe Lowering Amount]

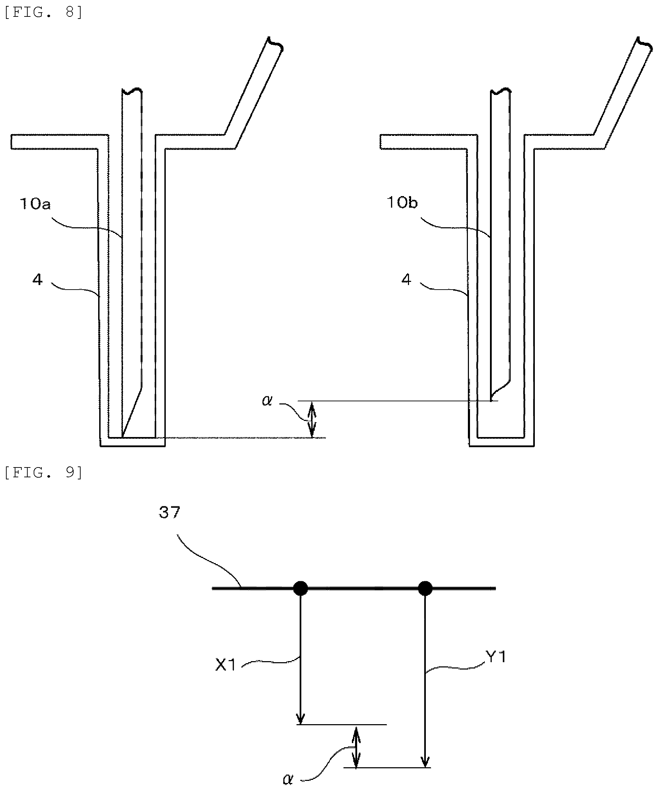

When the specimen aspirated by the specimen dispensing probe 10 is ejected into the reaction vessel 4, the control unit applies a specified operation amount (for example, the number of pulses) to the upper and lower drive portion of the specimen dispensing mechanism 2 in order to lower the specimen dispensing probe 10 by a specified distance from the origin height. FIG. 8 is a diagram showing a position relationship with the reaction vessel when the unused probe and the used probe are lowered from the origin height by a specified amount.

As shown in FIG. 8, even if the unused probe 10a and the used probe 10b are lowered by the same lowering amount from the origin height, the positions of the probe tips are different. That is, according to FIG. 8, it can be found that the tip of the unused probe 10a is in contact with the bottom surface of the reaction vessel 4, but the tip of the used probe 10b is separated from the bottom surface of the reaction vessel 4 by the change amount α. Here, in order to maintain the dispensing accuracy, the specimen dispensing probe 10 generally ejects the specimen in a state of being in contact with the bottom surface of the reaction vessel 4. However, when the specimen dispensing probe 10 is shortened by repeated use and the specimen is ejected in a state of being separated from the bottom surface of the specimen container 12, the dispensing accuracy may decrease. Therefore, in the present embodiment, the lowering amount of the probe in a specimen ejecting operation is corrected based on the difference between the lowering amount Y of the probe in the state checking operation described above with reference to FIG. 7 and the reference lowering amount X.

FIG. 9 is a schematic diagram showing a concept of correcting the probe lowering amount. When the specimen is ejected using the unused probe 10a, the control unit applies a predetermined operation amount to the upper and lower drive portion of the specimen dispensing mechanism 2 to lower the unused probe 10a from the origin height 37 by a lowering amount X1. On the other hand, when the specimen is ejected using the used probe 10b, the control unit gives a predetermined operation amount to the upper and lower drive portion of the specimen dispensing mechanism 2 to lower the used probe 10b from the origin height by a corrected lowering amount Y1. Here, the corrected lowering amount Y1 is obtained by adding the change amount α calculated in the above-described state checking operation to the lowering amount X1 before correction serving as the reference. In this way, by correcting the probe lowering amount according to a degree of wear, that is, the length of the probe, the probe tip can be reliably brought into contact with the bottom surface of the specimen container 12, and the dispensing accuracy can be ensured. Although the dispensing accuracy can be ensured by correcting the probe lowering amount until the change amount α reaches the first threshold A, when the change amount reaches the first threshold A, the dispensing accuracy cannot be ensured by correcting the probe lowering amount, and the probe needs to be replaced.

### [Method for Predicting Probe Replacement Time]

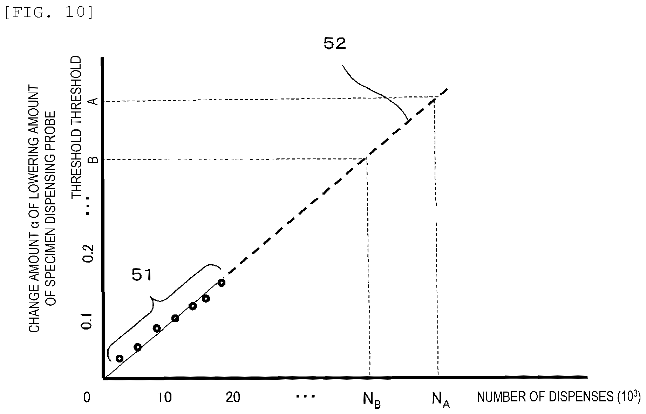

FIG. 10 is a graph showing an example of a relationship between the change amount of the probe lowering amount and the number of dispenses. The change amount α of the probe lowering amount is calculated every time the state checking operation of the used probe 10b is performed, and is stored in the storage unit. A plurality of points 51 plotted in FIG. 10 indicate the transition of the change amount α calculated in each checking operation (vertical axis) and the transition of the cumulative number of dispenses at the time of calculation (horizontal axis). The control unit generates an approximation curve 52 connecting the plurality of points 51 and an origin, and calculates a slope of the approximation curve 52 to predict number of dispenses N_{A} when the change amount α reaches the first threshold A and number of dispenses N_{B} when the change amount α reaches the second threshold B. By outputting a prediction result, the control unit can notify the user of a rough estimate of the replacement time of the probe and prompt the user to prepare for probe replacement. The prediction is not limited to the number of dispenses until each threshold is reached. For example, the control unit may predict the number of days until each threshold is reached by creating an approximation curve for the relationship between the change amount α and the number of days.

### [Probe State Checking Screen]

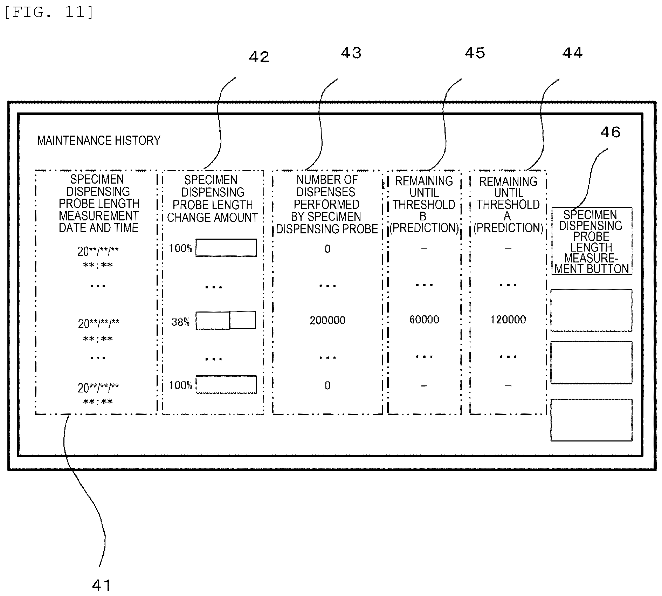

FIG. 11 is a diagram showing an example of a probe state checking screen. For example, when the user performs a predetermined operation using the input unit in a menu related to the maintenance of the autonomous analysis device, the control unit reads a history of the state checking operation stored in the storage unit and displays, on the output unit, a state checking screen (maintenance history) as shown in FIG. 11. A checking operation date and time display field 41 displays a date and time when the state checking operation of the probe is performed. A length change amount display field 42 displays the change amount α calculated by the state checking operation. The change amount α to be displayed may be the number of pulses to be applied to the upper and lower drive portion, but it is easier for the user to grasp the change amount α by converting it into a length. Further, it is also possible to display a degree of shortening in percentage or in graph form, assuming that the length of the unused probe 10a is 100. A number-of-dispenses display field 43 displays the cumulative number of dispenses when the state checking operation is performed. When the change amount α starts to decrease (becomes zero), it means that the probe is replaced, and the cumulative number of dispenses may be automatically reset to zero. A first threshold A display field 44 displays the number of remaining dispenses until the change amount α reaches the first threshold A, and a second threshold B display field 45 displays the number of remaining dispenses until the change amount α reaches the second threshold B. The number of remaining dispenses displayed in these fields are predicted by the method described above with reference to FIG. 10.

It is desirable that the state checking operation of the probe is periodically performed, and for example, the state checking operation may be incorporated into a preparation operation performed at the start of an analysis operation and may be automatically performed for each analysis operation. As shown in FIG. 11, a checking operation execution button 46 may be provided on the state checking screen, and the state checking operation of the probe may be immediately executed when the button is operated.

### [Probe Length Measurement Setting Screen]

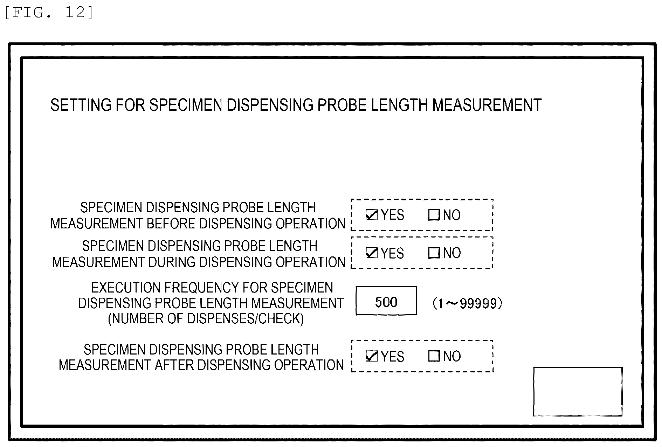

FIG. 12 is a diagram showing an example of a probe length setting screen. On the screen as shown in FIG. 12, the user can appropriately designate a timing to perform the state checking operation of the probe. For example, it is possible to designate to execute the state checking operation of the probe before the start of the series of specimen dispensing operations, or to designate to execute the state checking operation of the probe after the start of the series of specimen dispensing operations. Since the state checking operation according to the present embodiment is executed in one cycle, even in the middle of the series of dispensing operations, if there is an empty cycle, the state checking operation can be executed at that timing. Further, a predetermined number of dispenses may be designated in advance, and the state checking operation of the probe may be executed at a time point that the cumulative number of dispenses reaches the designated number of times. When the designated number of times (for example, 500 times) is reached, in a case where it is in the middle of the series of specimen dispensing operations, the state checking operation of the probe may be executed at a time point (for example, 520 times) when dispensing of the remaining specimens is completed.

The invention is not limited to the above-described embodiment and may include various modifications. For example, in the above-described embodiment, as the contact detection sensor 20, a sensor that detects the contact of the probe tip by entry of the detection plate 23 is used, and a sensor that detects the contact of the probe tip by detecting a change in capacitance or pressure may be used instead of the sensor. In the above-described embodiment, the specimen dispensing probe 10 that aspirates and ejects a specimen is described, and the invention can also be applied to a dispensing probe that aspirates and ejects other liquids such as a reagent and a detergent.

Further, in the above-described embodiment, the autonomous analysis device including the analysis unit that analyzes the mixed liquid into which the specimen and the reagent are dispensed is described as an example, and the invention can also be applied to a dispensing device that does not include the analysis unit and only dispenses the specimen. For example, the invention can also be applied to a specimen transport device that dispenses a specimen into another container from a specimen container charged by a specimen charging unit and closed by a plug, and transports a container containing a subdivided sub-specimen.

### Reference Signs List

1: computer
2: specimen dispensing mechanism
3: reagent dispensing mechanism
4: reaction vessel
5: reagent cooler
10: specimen dispensing probe
10a: unused probe
10b: used probe
11: specimen
12: specimen container
13: plug
14: specimen rack
15: cleaning tank
20: contact detection sensor
21: stopper
22: spring
23: detection plate
24: connection portion
25: object
37: origin height
51: point
52: approximation curve
41: checking operation date and time display field
42: length change amount display field
43 number-of-dispenses display field
44: first threshold A display field
45: second threshold B display field
46: checking operation execution button

## Claims

1. A dispensing device comprising:
a probe configured to aspirate and eject a liquid;
a sensor configured to detect contact of a tip of the probe;
a drive unit configured to drive the probe in an up-down direction; and
a control unit configured to control the drive unit, wherein
the control unit performs a checking operation of checking a change in a length of the probe by lowering the probe by the drive unit until contact with a predetermined reference surface forming a part of the dispensing device is detected.

2. The dispensing device according to claim 1, wherein
the control unit outputs an alarm when a difference between a lowering amount of the probe in the checking operation and a reference lowering amount is equal to or greater than a predetermined threshold.

3. The dispensing device according to claim 2, wherein
the control unit outputs a first alarm and does not perform an ejecting operation of ejecting the liquid when the difference is equal to or greater than a first threshold, and outputs a second alarm different from the first alarm and performs the ejecting operation of ejecting the liquid when the difference is equal to or greater than a second threshold smaller than the first threshold.

4. The dispensing device according to claim 2, wherein
the control unit predicts, based on a relationship between transition of the number of dispenses by the probe and transition of the difference, the number of dispenses until the difference reaches the threshold.

5. The dispensing device according to claim 1, wherein
the control unit corrects, based on a difference between a lowering amount of the probe in the checking operation and a reference lowering amount, a lowering amount of the probe in an ejecting operation of ejecting the liquid.

6. The dispensing device according to claim 5, wherein
when the difference is equal to or greater than a first threshold, a first alarm is output and the ejecting operation of ejecting the liquid is not performed.

7. The dispensing device according to claim 1, wherein
the control unit performs the checking operation at a preset timing.

8. The dispensing device according to claim 1, wherein
the probe penetrates a plug for closing a container to aspirate the liquid in the container.

9. The dispensing device according to claim 1, further comprising:
a cleaning tank configured to clean the probe, wherein
the reference surface is a plane forming the cleaning tank.

10. A probe state checking method in a dispensing device configured to dispense a liquid, the method comprising:
checking a change in a length of a probe by lowering the probe until contact with a predetermined reference surface forming a part of the dispensing device is detected.
